# EUROPEAN PATENT APPLICATION

(11) **EP 2 234 202 A1**
(43) Date of publication of application: **29.09.2010**
(21) Application number: 09004179.9
(22) Date of filing: 24.03.2009
(51) Int. Cl.: H01Q 1/24, H01Q 1/44, H01Q 9/04, H01Q 9/30, H01Q 9/42

(54) **Antenna and electronic device**

(62) Divisional of application: 09180107.6
(71) Applicant: Giga-Byte Communications, Inc., Taipei (TW); Giga-Byte Technology Co., Ltd., Hsin-Tien Taipei-Hsien (TW)
(72) Inventor: Chuang, Shih-Ming, Taipei 231 (TW)
(74) Representative: Brandenburger, Karin

(57) **Abstract**

An antenna comprises a metal pen, a first contact terminal and a first switch. The metal pen is configured for receiving a wireless signal. The first contact terminal is configured for transmitting the wireless signal. The first switch is coupled to the first contact terminal and configured for outputting the wireless signal to a first processing unit or a second processing unit according to a control signal. A mode of the first processing unit processing the wireless signal is different from that of the second processing unit.

## Description

### BACKGROUND

### 1. Field of the Invention

The present invention relates to an antenna, and more particularly to an antenna for enabling various operating systems to share a same wireless signal.

### 2. Description of the Related Art

Incipient communication systems employ transmission lines to transmit signals. However, with the rapid development of the technology, the conventional wire technology cannot satisfy needs of users. For Improving the portability of electronic products, many electronic products employ antennas to receive or transmit wireless signals.

Generally, the wireless technology employs radio waves to transmit data. In use, the wireless technology has a similar application with the wire technology. However, a maln difference therebetween is that mediums for transmitting the data are different. In addition, the wireless technology is superior to the wire technology in the hardware architecture and the portability in use since the wireless technology employs the radio waves to transmit the data without the transmission lines.

### BRIEF SUMMARY

An antenna in accordance with an exemplary embodiment of the present invention comprises a metal pen, a first contact terminal and a first switch. The metal pen is configured for receiving a wireless signal. The first contact terminal Is configured for transmitting the wireless signal. The first switch is coupled to the first contact terminal and is configured for outputting the wireless signal to a first processing unit or a second processing unit according to a control signal. A mode of the first processing unit processing the wireless signal is different from that of the second processing unit.

An electronic device in accordance with another exemplary embodiment of the present invention may operate in a first operating system or a second operating system. The electronic device comprises a first processing unit, a second processing unit and a first antenna. The first antenna comprises a metal pen, a first contact terminal and a first switch. The metal pen is configured for receiving a first wireless signal. The first contact terminal is configured for transmitting the first wireless signal. The first switch is coupled to the first contact terminal and is configured for outputting the first wireless signal to the first processing unit or the second processing unit according to a control signal. When the first switch outputs the first wireless signal to the first processing unit, the first processing unit processes the first wireless signal for enabling the electronic device to operate In the first operating system. When the first switch outputs the first wireless signal to the second processing unit, the second processing unit processes the first wireless signal for enabling the electronic device to operate in the second operating system. A mode of the first processing unit processing the first wireless signal is different from that of the second processing unit.

For better understanding the features and advantages of the present invention, the following will describe the various exemplary embodiments and drawings in detail.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 illustrates an electronic device in accordance with an exemplary embodiment of the present invention.

FIG. 2 illustrates an antenna in accordance with an exemplary embodiment of the present invention.

FIG. 3 illustrates an electronic device in accordance with another exemplary embodiment of the present invention.

FIG. 4 illustrates an antenna In accordance with another exemplary embodiment of the present invention.

### DETAILED DESCRIPTION

Reference will now be made to the drawings to described exemplary embodiments of the present antenna and the present electronic device, In detail. The following description is given by way of example, and not limitation.

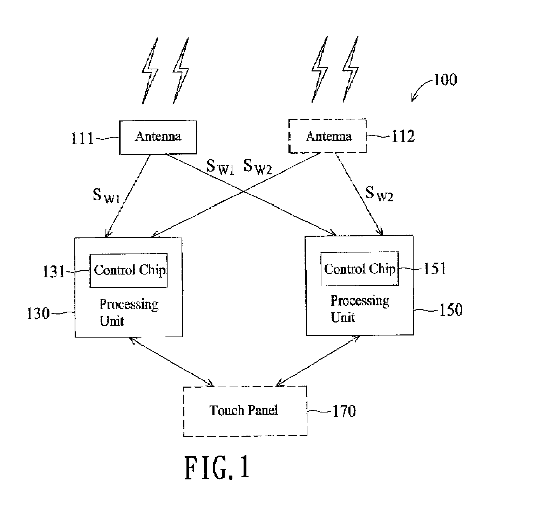

FIG. 1 illustrates an electronic device in accordance with an exemplary embodiment of the present invention. The electronic device 100 of the present invention can operate In various operating systems. For example, it can be switched in the Global Positioning System (GPS), the Third Generation Mobile Communication (3G) System, the Digital Video Broadcasting (DVB) System, the Bluetooth System and the Wireless-Fidelity (Wi-Fi) System.

In this exemplary embodiment of the present invention, the electronic device 100 includes antennas 111, 112, processing units 130, 150 and a touch panel 170. The antennas 111 and 112 receive wireless signals Sw1 and Sw2 respectively, and the wireless signals Sw1 and Sw2 are in a same frequency band. Since the electronic device 100 employs the two antennas to receive the wireless signals, the electronic device 100 also can exactly receive the wireless signals even if the intensity of the wireless signals at a location of the electronic device 100 is weak. In other exemplary embodiments of the present invention, the electronic device 100 may only have a single antenna.

After the processing unit 130 receives and processes the wireless signals Sw1 and Sw2, the electronic device 100 operates In a first operating system (such as, one of the GPS, the 3G System, the DVB System, the Bluetooth System and the Wi-Fi System After the processing unit 150 receives and processes the wireless signals Sw1 and Sw2. the electronic device 100 operates in a second operating system (such as, another of the GPS. the 3G System, the DVB System, the Bluetooth System and the Wi-Fi System).

For receiving and processing the wireless signals Sw1 and Sw2, the processing units 130 and 150 have control chips 131 and 151 respectively. The control chips 131 and 151 may be diversity chip ICs configured for receiving the two wireless signals simultaneously. In other exemplary embodiments of the present invention, if the electronic device 100 only employs a single antenna to receive the wireless signals, the processing units 130 and 150 do not need the control chips 131 and 151.

The touch panel 170 enables the electronic device 100 to have a touch function. The antenna 111 may further be served as a touch pen except for receiving the wireless signals. In other exemplary embodiments of the present invention, if the electronic device 100 does not have the touch function, the touch panel 170 may be omitted.

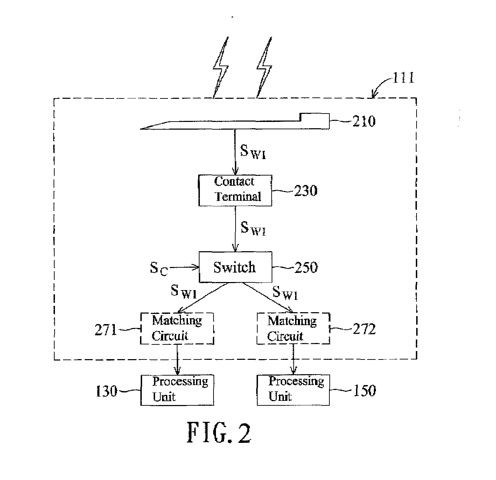

FIG. 2 illustrates an antenna in accordance with an exemplary embodiment of the present invention. In this exemplary embodiment of the present invention, the antenna 111 includes a metal pen 210, a contact terminal 230, a switch 250 and matching circuits 271, 272.

The metal pen 210 is configured for receiving the wireless signal Sw1. The metal pen 210 may be a monopole antenna or a planar inverted-F antenna (PIFA). In this exemplary embodiment of the present invention, the metal pen 210 has a fixed length. In other exemplary embodiments of the present invention, the metal pen 210 is telescopic. Therefore, users can adjust the length of the metal pen 210 according to an actual need (which of the operating systems should be employed).

The contact terminal 230 transmits the wireless signal Sw1 received by the metal pen 210. In an exemplary embodiment of the present invention, the contact terminal 230 may be a spring lamination. In another exemplary embodiment of the present invention, the contact terminal 230 may be a pogo pin.

The switch 250 is coupled to the contact terminal 230 and is configured for outputting the wireless signal Sw1 to the matching circuit 271 or 272 according to a control signal Sc. By switching the switch 250, the various operating systems may share the wireless signal Sw1 received by the antenna 111. For example, If the electronic device 100 operates in the first operating system, the control signal Sc enables the switch 250 to output the wireless signal Sw1 to the matching circuit 271. If the electronic device 100 operates in the second operating system, the control signal Sc enables the switch 260 to output the wireless signal Sw1 to the matching circuit 272.

The matching circuit 271 matches the wireless signal Sw1 outputted by the switch 250 and outputs Its matched result to the processing unit 130. The processing unit 130 processes the matched result matched by the matching circuit 271for enabling the electronic device 100 to operate in the first operating system. The matched result of the matching circuit 271 matching the wireless signal Sw1 is determined by an input signal needed by the processing unit 130. In other exemplary embodiments of the present invention, If the processing unit 130 Is capable of directly processing the wireless signal Sw1, the matching circuit 271 may be omitted. In an exemplary embodiment of the present invention, a processed result processed by the processing unit 130 is applied into one of the GPS, the 3G System, the DVB System, the Bluetooth System and the Wi-Fi System.

Similarly, the matching circuit 272 matches the wireless signal Sw1 outputted by the switch 250 and outputs its matched result to the processing unit 150. The processing unit 150 processes the matched result matched by the matching circuit 272for enabling the electronic device 100 to operate in the second operating system. The matched result of the matching circuit 272 matching the wireless signal Sw1 is determined by an input signal needed by the processing unit 150. In other exemplary embodiments of the present invention, the matching circuit 272 may be omitted. In an exemplary embodiment of the present invention, a processed result processed by the processing unit 150 is applied into another of the GPS, the 3G System, the DVB System, the Bluetooth System and the Wi-Fi System.

For enabling the electronic device 100 to operate in the different operating systems, a mode of the processing unit 130 processing the wireless signal Sw is different from that of the processing unit 150. In an exemplary embodiment of the present invention, an encoding mode of the processing unit 130 encoding the wireless signal Sw1 is different from that of the processing unit 150. In other exemplary embodiments of the present Invention, an operating frequency band or a communication protocol of the processing unit 130 is different from that of the processing unit 150.

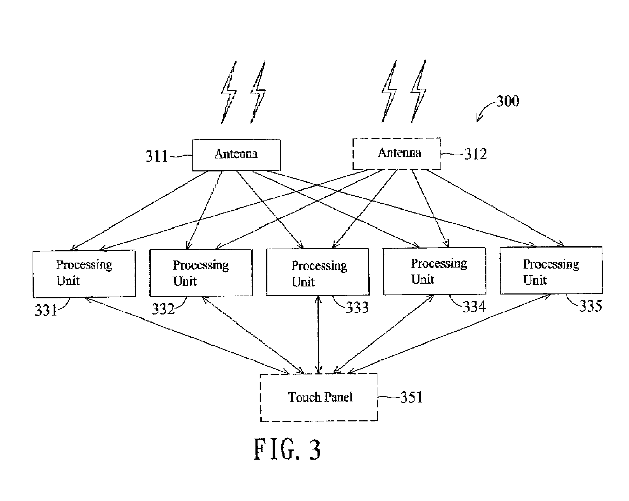

FIG. 3 illustrates an electronic device in accordance with another exemplary embodiment of the present invention. In this exemplary embodiment, the electronic device 300 may operate in five different operating systems. As shown in FIG. 3, the electronic device 300 includes antennas 311, 312, processing units 331-335 and a touch panel 351. Operating principles of the antennas 311, 312, the processing units 331-335 and the touch panel 351 are same to those of the antenna 111, the processing unit 130 and the touch panel 170 as shown in FIG. 1, and not described in following,

The electronic device 300 can operate in the five different operating systems by the processing units 331-335. For example, the processing unit 331 may enable the electronic device 300 to operate in the GPS. The processing unit 332 may enable the electronic device 300 to operate in the 3G System. The processing unit 333 may enable the electronic device 300 to operate in the DVB System. The processing unit 334 may enable the electronic device 300 to operate in the Bluetooth System. The processing unit 335 may enable the electronic device 300 to operate in the Wi-Fi System.

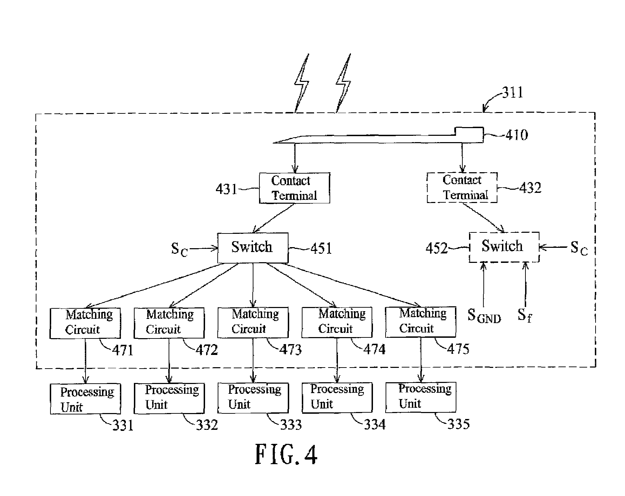

FIG. 4 illustrates an antenna in accordance with another exemplary embodiment of the present invention. FIG. 4 is similar to FIG. 2, except that the antenna 311 includes matching circuits 471-475, a contact terminal 432 and a switch 452. Operating principles of a contact terminal 431, a switch 451 and the matching circuits 471-475 are same to those of the contact terminal 230, the switch 250 and the matching circuit 271, and not described in following.

In this exemplary embodiment of the present invention, an amount of the matching circuits is equal to that of the processing units. However, if the processing units are capable of directly processing the wireless signals received by the antenna, the corresponding matching circuits may be omitted. Therefore, the amount of the matching circuits Is not equal to that of the processing units.

The contact terminal 432 as shown in FIG. 4 can provide a ground potential S_{GND} or a floating potential Sf to the metal pen 410. In this exemplary embodiment, the switch 452 outputs the ground potential S_{GND} or the floating potential Sf to the contact terminal 432 according to the control signal Sc. When the contact terminal 432 provides the ground potential S_{GND} to the metal pen 410, the metal pen 410 can receive highfrequency wireless signals. When the contact terminal 432 provides the ground potential Sf to the metal pen 410, the metal pen 410 can receive low-frequency wireless signals.

In addition, the control signal Sc is further related to the length of the metal pen 410. If the metal pen 410 is telescopic, the metal pen 410 extends to 8 centimeters from original 4 centimeters, and the electronic device 400 will operate in the 3G System. When employing the metal pen 410 of the 4 centimeters to receive the wireless signals, the control signal Sc enables the switch 452 to output the floating potential Sf to the contact terminal 432. When employing the metal pen 410 of the 8 centimeters to receive the wireless signals, the control signal Sc enables the switch 452 to output the ground potential S_{GND} to the contact terminal 432. In other exemplary embodiments of the present invention, the contact terminal 432 and the switch 452 may be omitted if the length of the metal pen is designed properly.

From FIGS. 2 and 4 It can be seen that, the switches 250 and 451 can selectively transmit the wireless signals to a different one of the processing units. Therefore, the various operating systems can share the wireless signals received by a same antenna. In an exemplary embodiment, the wireless signals are matched by the matching circuits, and the matched results are provided to the corresponding processing units.

Furthermore, the antennas 111 and 311 as shown in FIGS. 2 and 4 further have touch pens. When not employing the touch pens, the antennas 111 and 311 can only receive the wireless signals to provide the communication function.

The above description Is given by way of example, and not limitation. Given the above disclosure, one skilled In the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. An antenna, comprising:
a metal pen configured for receiving a wireless signal;
a first contact terminal configured for transmitting the wireless signal; and
a first switch coupled to the first contact terminal and outputting the wireless signal to one of a first processing unit and a second processing unit according to a control signal, wherein a mode of the first processing unit processing the wireless signal is different from that of the second processing unit.

2. The antenna as claimed In claim 1, further comprising:
a first matching circuit configured for matching the wireless signal and outputting its matched result thereof to the first processing unit; and
a second matching circuit configured for matching the wireless signal and outputting its matched result thereof to the second processing unit.

3. The antenna as claimed in claim 1, wherein the metal pen is one of a monopole antenna or a planar inverted-F antenna, the first contact terminal is one of a spring lamination or a pogo pin.

4. The antenna as claimed in claim 1, wherein an encoding mode of the first processing unit, an operating frequency band of the first processing unit, or a communication protocol of the first processing unit is different from that of the second processing unit.

5. The antenna as claimed in claim 1, wherein the wireless signal processed by the first processing unit is applied into one of a Global Positioning System (GPS), a Third Generation Mobile Communication (3G) System, a Digital Video Broadcasting (DVB) System, a Bluetooth System and a Wireless-Fidelity (Wi-Fi) System, and the wireless signal processed by the second processing unit is applied into another of the GPS. the 3G System, the DVB System, the Bluetooth System and the Wi-Fi System.

6. The antenna as claimed in claim 1, further comprising:
a second contact terminal configured for providing one of a ground potential and a floating potential to the metal pen, and
a second switch configured for providing one of the ground potential and the floating potential to the second contact terminal according to the control signal.

7. An electronic device operating in one of a first operating system and a second operating system, comprising:
a first processing unit;
a second processing unit; and
a first antenna, comprising:
a metal pen configured for receiving a first wireless signal;
a first contact terminal configured for transmitting the first wireless signal; and
a first switch coupled to the first contact terminal and configured for outputting the first wireless signal to one of the first processing unit and the second processing unit according to a control signal, wherein when the first switch outputs the first wireless signal to the first processing unit, the first processing unit processes the first wireless signal for enabling the electronic device to operate in the first operating system; when the first switch outputs the first wireless signal to the second processing unit, the second processing unit processes the first wireless signal for enabling the electronic device to operate in the second operating system, a mode of the first processing unit processing the first wireless signal is different from that of the second processing unit.

8. The electronic device as claimed in claim 7, further comprising:
a second antenna configured for receiving a second wireless signal, wherein each of the first processing unit and the second processing unit has a control chip configured for processing the first and second wireless signals, the first and second wireless signals are In a same frequency band.

9. The electronic device as claimed in claim 8, wherein the control chip is a diversity chip IC.

10. The electronic device as claimed in claim 8, further comprising:
a touch panel configured for providing a touch function, wherein the first antenna is served as a touch pen.

11. The electronic device as claimed in claim 8, further comprising:
a first matching circuit configured for matching the wireless signal and outputting its matched result thereof to the first processing unit; and
a second matching circuit configured for matching the wireless signal and outputting its matched result thereof to the second processing unit.

12. The electronic device as claimed in claim 8, wherein the metal pen is one of a monopole antenna and a planar inverted-F antenna, the first contact terminal is one of a spring lamination and a pogo pin.

13. The electronic device as claimed in claim 8, wherein an encoding mode of the first processing unit, an operating frequency band of the first processing unit, or a communication protocol of the first processing unit is different from that of the second processing unit.

14. The electronic device as claimed in claim 8, wherein the wireless signal processed by the first processing unit is applied Into one of a Global Positioning System (GPS), a Third Generation Mobile Communication (3G) System, a Digital Video Broadcasting (DVB) System, a Bluetooth System and a Wireless-Fidelity (Wi-Fi) System, and the wireless signal processed by the second processing unit is applied into another of the GPS, the 3G System, the DVB System, the Bluetooth System and the Wi-Fi System.

15. The electronic device as claimed in claim 8, further comprising:
a second contact terminal configured for providing one of a ground potential and a floating potential to the metal pen; and
a second switch configured for providing one of the ground potential and the floating potential to the second contact terminal according to the control signal.
